# EUROPÄISCHE PATENTSCHRIFT

(11) **EP 1 994 370 B1**
(45) Veröffentlichungstag und Bekanntmachung des Hinweises auf die Patenterteilung: **06.05.2015**
(21) Anmeldenummer: 07726730.0
(22) Anmeldetag: 09.03.2007
(51) Int. Cl.: G01F 1/58

(54) **POTENTIALAUSGLEICH ZWISCHEN EINEM MEDIUM UND DEM MESSAUFNEHMER EINES DURCHFLUSSMESSGERÄTS**
POTENTIAL EQUALIZATION BETWEEN A MEDIUM AND THE MEASUREMENT SENSOR OF A FLOWMETER
ÉQUILIBRAGE DES POTENTIELS ENTRE UN FLUIDE ET LE CAPTEUR DE MESURE D'UN DÉBITMÈTRE

(30) Priorität: 13.03.2006 DE 102006011756
(43) Veröffentlichungstag der Anmeldung: 26.11.2008
(73) Patentinhaber: Endress+Hauser Flowtec AG, 4153 Reinach (CH)
(72) Erfinder: MAGLIOCCA, Antonio, CH-4055 Basel (CH); KERROM, Roger, 79540 Lörrach (DE)
(74) Vertreter: Andres, Angelika Maria
(86) Internationale Anmeldenummer: PCT/EP2007/052207
(87) Internationale Veröffentlichungsnummer: WO 2007/104707

(56) Entgegenhaltungen:
- GB-A- 699 841
- GB-A- 2 097 935

## Beschreibung

Die Erfindung betrifft einen Messaufnehmer eines Durchflussmessgeräts. Durchtlussmessgeräte werden in der industriellen Messtechnik zur Messung von Volumenströmen eingesetzt.

Ein heute gängiges Messverfahren beruht auf dem magneto-hydrodynamischen Prinzip und wird in Verbindung mit magnetisch induktiven Durchflussmessaufnehmern eingesetzt. Dabei wird ein zumindest in geringem Umfang elektrisch leitfähiges Medium, dessen Volumenstrom gemessen werden soll, durch ein Messrohr geleitet, das im wesentlichen senkrecht zur Rohrachse von einem Magnetfeld durchsetzt ist. Senkrecht zum Magnetfeld bewegte Ladungsträger induzieren senkrecht zu deren Durchflussrichtung eine Spannung, die über entsprechend angeordnete Messelektroden abgreifbar ist. Die Messelektroden sind hierzu mit dem Medium entweder kapazitiv oder galvanisch gekoppelt. Die induzierte Spannung ist proportional zu einer über einen Querschnitt des Messrohres gemittelten Strömungsgeschwindigkeit des Mediums und damit proportional zum Volumenstrom.

Herkömmliche Durchflussmessgeräte, insb. magnetisch induktive Durchflussmessgeräte, weisen einen Messaufnehmer auf, der ein Messrohr umfasst, das in ein bestehendes Rohrleitungssystem eingesetzt wird, und während der Messung von dem Medium durchströmt wird. Hierzu sind am Messaufnehmer zu beiden Seiten des Messrohrs Prozessanschlüsse vorgesehen. Die Prozessanschlüsse stehen in unmittelbarem Kontakt mit dem Medium und sind direkt auf dem Messaufnehmer montiert.

Aufgrund der geforderten hohen mechanischen Stabilität für solche Messrohre, bestehen diese bevorzugt aus einem äußeren, insb. metallischen, Trägerrohr von vorgebbarer Festigkeit und Weite, das innen mit einem elektrisch nicht leitenden Isoliermaterial von vorgebbarer Dicke, dem so genannten Liner, beschichtet ist. Es gibt beispielsweise magnetisch induktive Durchflussmessaufnehmer, die jeweils ein in eine Rohrleitung druckdicht einfügbares, ein einlassseitiges erstes Ende und ein auslassseitiges zweites Ende aufweisendes Messrohr mit einem zumeist nicht ferromagnetischen Trägerrohr als eine äußere Umhüllung des Messrohrs, und einem in einem Lumen des Trägerrohrs untergebrachten, aus einem Isoliermaterial bestehenden rohrförmigen Liner zum Führen eines strömenden und vom Trägerrohr isolierten Mediums umfassen. Der Liner dient der chemischen Isolierung des Trägerrohrs vom Medium. Bei Trägerrohren von hoher elektrischer Leitfähigkeit, insb. bei metallischen Trägerrohren, dient der Liner außerdem als elektrische Isolierung zwischen dem Trägerrohr und dem Medium, die ein Kurzschließen des elektrischen Feldes über das Trägerrohr verhindert. Durch eine entsprechende Auslegung des Trägerrohrs ist somit eine Anpassung der Festigkeit des Messrohrs an die im jeweiligen Einsatzfall vorliegenden mechanischen Beanspruchungen realisierbar, während mittels des Liners eine Anpassung des Messrohr an die für den jeweiligen Einsatzfall geltenden chemischen, insb. hygienischen, Anforderungen realisierbar ist. Zur Fertigung des Liners werden oftmals Injection-Molding- oder Transfer-Molding-Verfahren angewendet. Es ist jedoch auch üblich, einen vollständig vorgefertigten Liner, z.B. aus einem thermoplastischen oder einem duroplastischen Kunststoff in das Trägerrohr einzusetzen.

Eine einwandfreie Messung ist nur dann gewährleistet, wenn das Medium und der Messaufnehmer auf demselben elektrischen Potential liegen. Hierzu wird vorzugsweise sowohl das Medium als auch das Gehäuse des Messaufnehmers mit einem Erdanschluss versehen. Sofern die Prozessanschlüsse aus elektrisch leitfähigem Material, in der Regel einem Metall, bestehen, erfolgt der Potentialausgleich unmittelbar über die Prozessanschlüsse, die im Messbetrieb sowohl mit dem Medium als auch mit dem Messaufnehmer in Kontakt stehen. Damit entfällt der Notwendigkeit für weitere Potentialausgleichs-Maßnahmen. Das Medium ist unmittelbar über die Erdung des Messaufnehmers bzw. dessen Gehäuses geerdet.

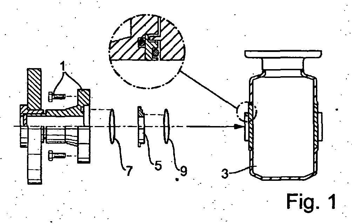

Es gibt jedoch eine Vielzahl von Anwendungen, in denen bevorzugt Prozessanschlüsse aus Isolatoren, insb. aus Kunststoff, eingesetzt werden. In dem Fall sind Maßnahmen zu ergreifen, um einen Potentialausgleich zwischen dem Medium und dem Messaufnehmer zu gewährleisten. Die Anmelderin bietet hierzu heute beispielsweise in Verbindung mit ihrem magnetisch induktiven Durchflussmessgerät Promag H einen Erdungsring an, der zwischen den Messaufnehmer und den Prozessanschluss eingesetzt wird und im Messbetrieb sowohl mit dem Medium als auch mit dem Messaufnehmer in Kontakt steht. Der Erdungsring bewirkt den erforderlichen Potentialausgleich. Fig. 1 zeigt ein Beispiel hierzu. Es ist ein Prozessanschluss 1 und ein Messaufnehmer 3 dargestellt. Zwischen dem Prozessanschluss 1 und dem Messaufnehmer 3 ist ein Erdungsring 5 angeordnet. Der Erdungsring 5 besteht aus einem elektrisch leitfähigen Material und steht im Messbetrieb in unmittelbarem Kontakt mit dem Medium. Das Medium strömt durch den Erdungsring 5 hindurch. Gleichzeitig steht der Erdungsring 5 im montierten

Zustand in unmittelbarem Kontakt mit dem Gehäuse des Messaufnehmers 3. Zwischen dem Erdungsring 3 und dem Prozessanschluss 1 und zwischen dem Erdungsring 5 und dem Messaufnehmer 3 ist jeweils eine Dichtung 7, 9, hier jeweils ein O-Ring, vorgesehen.

Das Material des Erdungsringes 3 ist in Abhängigkeit von dem Werkstoff der Messelektroden des magnetisch induktiven Messaufnehmers zu wählen, um eine elektrochemische Korrosion der Messelektroden zu vermeiden. Außerdem muss natürlich ein Material gewählt werden, dass eine ausreichende chemische und/oder mechanische Beständigkeit des Erdungsrings 5 im Hinblick auf das Medium gewährleistet. Je nach Anwendung kann es erforderlich sein relativ teure Spezialwerkstoffe einzusetzen.

Die Größe des Erdungsringes 5 ist abhängig von der Nennweite des jeweiligen Prozessanschlusses. Entsprechend ist die erforderliche Materialmenge für den Erdungsring 5 abhängig von der Nennweite. Je nach Größe des Erdungsrings 5 und der Wahl des Werkstoffes kann diese Form des Potentialausgleichs mit erheblichen Kosten verbunden sein.

Die GB 2 097 935 A offenbart eine Erdungsscheibe aus Kunststoff mit einem Erdungsdraht, welcher mit der Erdungsscheibe am Innenumfang vernäht ist.

Die GB 699,841 offenbart eine Erdungsvorrichtung die außerhalb eines Messrohres angeordnet ist.

Es ist eine Aufgabe der Erfindung einen Durchflussmessaufnehmer anzugeben, bei dem auf kostengünstige Weise ein Potentialausgleich zwischen dem Medium und dem Messaufnehmer bewirkt wird.

Hierzu besteht die Erfindung in einem Messaufnehmer eines Durchflussmessgeräts zum Messen eines Durchflusses eines Mediums durch ein bestehendes Rohrleitungssystem, mit
- einem Messaufnehmergehäuse,
- einem in dem Messaufnehmer integrierten Messrohr,
- zwei Prozessanschlüssen aus einem Isolator, über die das Messrohr an das Rohrleitungssystem anschließbar ist, und
- mindestens einer in einen der Prozessanschlüsse eingesetzten Elektrode,
   -- die in einem im Betrieb vom Medium durchströmten Innenraum des Prozessanschlusses mündet und über eine elektrisch leitende Verbindung mit dem Messaufnehmergehäuse verbunden ist und wobei die Elektrode eine Stiftelektrode ist, die durch eine Außenwand eines im Betrieb vom Medium durchströmten rohrförmigen Abschnitts des Prozessanschlusses hindurch in dessen Innenraum führt.

Gemäß einer weiteren Ausgestaltung ist die Elektrode in einer durchgehenden Bohrung in einer Außenwand des Prozessanschlusses angeordnet.

Gemäß einer Ausgestaltung weist jeder mindestens eine Elektrode enthaltende Prozessanschluss endseitig einen Flansch auf, der dazu dient, den Prozessanschluss an einem eine Mündung des Messrohrs umgebenden Gegenflansch des Messaufnehmers zu montieren.

Gemäß einer Weiterbildung der letztgenannten Ausgestaltung ist der Gegenflansch elektrisch leitfähig und Teil des Messaufnehmergehäuses oder er ist elektrisch leitend mit diesem verbunden. Der Flansch ist mittels elektrisch leitfähiger mechanischer Verbindungsmittel auf dem Gegenflansch montierbar, und die elektrisch leitende Verbindung zwischen der Elektrode und dem Messaufnehmergehäuse weist ein Verbindungsstück auf, über das die Elektrode elektrisch leitend mit den mechanischen Verbindungsmitteln verbunden ist, wenn der Flansch auf dem Gegenflansch montiert ist.

Gemäß einer Weiterbildung dieser Weiterbildung ist das Verbindungsstück ein metallisches Formteil, das einen ersten Abschnitt aufweist, der außen auf einem Bereich des Prozessanschlusses aufliegt, in den die Elektrode eingesetzt ist, und das einen zweiten Abschnitt aufweist, der auf einer vom Messaufnehmer abgewandten Oberfläche des Flansches aufliegt. Die Elektrode ist durch den ersten Abschnitt hindurch geführt und weist einen aus dem Prozessanschluss heraus führenden Kopf auf, der das Verbindungsstück berührt. Die elektrisch leitfähigen mechanischen Verbindungsmittel sind durch den zweiten Abschnitt hindurch geführt und berühren diesen.

Gemäß einer weiteren Weiterbildung weist die Elektrode
- eine Elektrodenspitze auf,
   -- die in den Innenraum des Prozessanschlusses mündet, und sie weist
- einen Elektrodenkopf auf,
   -- der aus dem Prozessanschluss heraus ragt und
   -- der mit der Elektrodenspitze verbunden ist.

Weiter besteht die Erfindung in einem Prozessanschluss aus einem Isolator für einen Messaufnehmer eines Durchflussmessgeräts zum Messen eines Durchflusses eines Mediums durch ein bestehendes Rohrleitungssystem, mit einem Messaufnehmergehäuse und einem in dem Messaufnehmer integrierten Messrohr, der dazu dient, das Messrohr an das Rohrleitungssystem anzuschließen,
- in den mindestens eine Elektrode eingesetzt ist,
   -- die in einem im Betrieb vom Medium durchströmten Innenraum des Prozessanschlusses mündet und über eine elektrisch leitende Verbindung mit dem Messaufnehmergehäuse verbindbar ist und wobei die Elektrode eine Stiftelektrode ist, die durch eine Außenwand des im Betrieb vorm Medium durchströmten rohrförmigen Abschnitts des Prozessanschlusses hindurch in dessen Innenraum führt.

Ein Vorteil der Erfindung besteht darin, dass die Elektroden im Vergleich zu herkömmlichen Erdungsringen sehr klein sind und dementsprechend kostengünstig hergestellt werden können. Hierdurch ist es auf kostengünstige Weise möglich, auch sehr hochwertige Materialien einzusetzen.

Ein weiterer Vorteil besteht darin, dass es durch den Einsatz von Elektroden im Prozessanschluss möglich ist, ohnehin vorhandene elektrisch leitfähige mechanische Verbindungsmittel zwischen dem Prozessanschluss und dem Messaufnehmer zur Herstellung des Potentialausgleichs zwischen dem Messaufnehmergehäuse und dem Medium zu nutzen. Auf diese Weise ist es möglich, das Medium über eine in Regel ohnehin vorhandene Erdung des Messaufnehmergehäuses zu erden.

Die Erfindung und weitere Vorteile werden nun anhand der Figuren der Zeichnung, in denen ein Ausführungsbeispiel dargestellt ist, näher erläutert; gleiche Teile sind in den Figuren mit gleichen Bezugszeichen versehen.
Fig. 1 zeigt einen magnetisch induktiven Durchflussmessaufnehmer mit einem Erdungsring, der dazu dient, einen Potentialausgleich zwischen dem Medium und dem Messaufnehmer zu bewirken;
Fig. 2 zeigt eine Ansicht eines magnetisch induktiven Messaufnehmers,
Fig. 3 zeigt einen Schnitt eines Prozessanschlusses;
Fig. 4 zeigt eine Ansicht des Prozessanschlusses von Fig. 3; und
Fig. 5 zeigt einen die Elektrode enthaltenden vergrößerten Ausschnitt des in

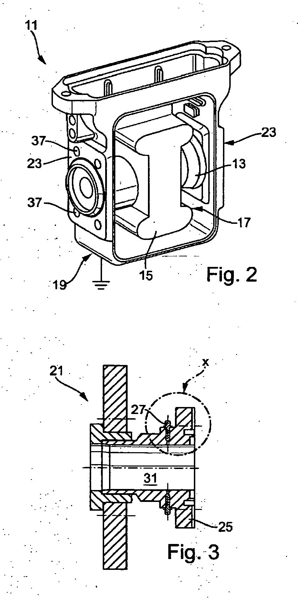

Fig. 3 dargestellten Prozessanschlusses.

Fig. 2 zeigt eine perspektivische Seitenansicht eines Messaufnehmers 11 eines Durchflussmessgeräts, der dazu dient einen Durchfluss eines Mediums durch ein bestehendes Rohrleitungssystem zu messen. In dem dargestellten Ausführungsbeispiel handelt es sich um einen Messaufnehmer eines magnetisch-induktiven Durchflussmessgeräts. Die Erfindung ist jedoch nicht auf magnetisch- induktive Messaufnehmer beschränkt. Sie ist auch zur Erdung von Medien in Verbindung mit Messaufnehmern einsetzbar, die andere Durchflussmessprinzipien einsetzen.

Der Messaufnehmer 11 des hier dargestellten magnetisch-induktiven Durchflussmessgeräts umfasst ein darin integriertes Messrohr 13 von vorgebbarer Form und Größe zum Führen des zu messenden Mediums, ein am Messrohr 13 angeordnetes Magnetfeldsystem 15 zum Erzeugen und Führen eines für die Messung erforderlichen, das im Messrohr 13 geführte Medium abschnittsweise durchsetzenden Magnetfeldes sowie eine ebenfalls am Messrohr 13 angeordnete Messelektrodenanordnung 17 zum Messen einer im Medium induzieren Spannung. Zum Abgreifen von im strömenden Medium induzierten Spannungen umfasst die Messelektrodenanordnung 17 beispielsweise zwei galvanische oder kapazitive Messelektroden.

Das Magnetfeldsystem ist in vorteilhafter Weise so ausgebildet, dass das damit erzeugte Magnetfeld das innerhalb des Messrohrs 13 befindliche Medium zumindest abschnittsweise senkrecht zu dessen Strömungsrichtung durchsetzt.

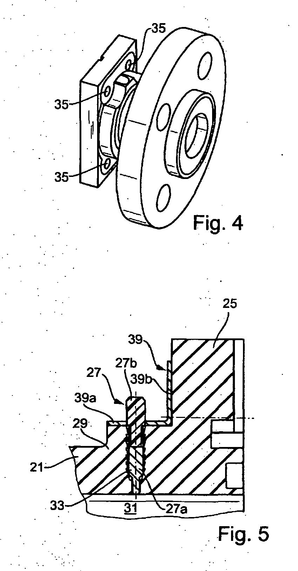

Weiter umfasst der Messaufnehmer 11 ein Messaufnehmergehäuse 19. In dem dargestellten Ausführungsbeispiel umfasst das Messaufnehmergehäuse 19 einen im wesentlichen starren Trägerrahmen zum Haltern eines mit dem Messaufnehmer 11 elektrisch und mechanisch verbundenen - hier nicht gezeigten - Elektronik-Gehäuses, wobei Messrohr 13 und Trägerrahmen einlassseitig und auslassseitig jeweils miteinander mechanisch verbunden sind. Zum druckdichten Einfügen in das bestehende Rohrleitungssystem weist der Messaufnehmer 11 einlassseitig und auslassseitig jeweils eine Vorrichtung zur mechanischen Befestigung eines Prozessanschlusses 21 auf. Fig. 3 zeigt einen Schnitt und Fig. 4 eine Ansicht des Prozessanschlusses 21. Die Prozessanschlüsse 21 bestehen aus einem Isolator, insb. aus einem Kunststoff, wie z.B. Polyvinylchlorid (PVC) oder Polyvinylidenfluorid (PVDF). In dem dargestellten Ausführungsbeispiel umfassen die Vorrichtungen zur mechanischen Befestigung der Prozessanschlüsse jeweils einen die jeweilige Mündung des Messrohrs 13 umgebenden Gegenflansch 23 auf den ein entsprechender Flansch 25 des jeweiligen Prozessanschlusses 21 montierbar ist. Die beiden Gegenflansche 23 sind im hier gezeigten Ausführungsbeispiel jeweils in den Trägerrahmen integriert, insb. in diesen eingeformt. In vorteilhafter Weise können Trägerrahmen und Gegenflansche 23 dabei einstückig ausgebildet sein.

Das Messrohr 13 besteht beispielsweise aus einem metallischen Trägerrohr, dessen im Messbetrieb vom Medium durchströmte Innenfläche mit einer Auskleidung aus einem Isolator versehen ist. Das Trägerrohr besteht aus einem magnetisch leitfähigem, insb. nicht-ferromagnetischen, Material, wie z.B. Edelstahl oder einem anderen rostfreien Metall. Das Trägerrohr umschließt die Auskleidung koaxial und dient somit als eine äußere formgebende sowie formstabilisierende Umhüllung. Die Auskleidung ist dabei so ausgebildet, dass das Messrohr 13 auf einer das hindurch strömende Medium berührenden Innenseite vollständig davon bedeckt ist und somit praktisch allein die Auskleidung vom durch das Messrohr 13 hindurchströmende Medium benetzt wird. Der Anschluss des Messaufnehmers 11 an das bestehende Rohrleitungssystem erfolgt über zwei Prozessanschlüsse 21.

Erfindungsgemäß ist in mindestens einen der beiden Prozessanschlüsse 21 mindestens eine Elektrode 27 eingesetzt. Fig. 5 zeigt einen vergrößerten die Elektrode 27 enthaltenden Ausschnitt X des in Fig. 3 dargestellten Prozessanschlusses 21. Die Elektrode 27 mündet in einen im Betrieb vom Medium durchströmten Innenraum 31 des Prozessanschlusses 21. Über die Elektrode 27 besteht eine elektrische leitende Verbindung zum Medium, die für den eingangs beschriebenen Potentialausgleich zwischen dem Messaufnehmer 11 und dem Medium zur Verfügung steht. Die Elektrode 27 ist im Gegensatz zu den oben genannten Erdungsringen 5 in ihren Abmessungen nicht an die Abmessungen des Rohrleitungssystems bzw. des Messrohrs 13 gebunden. Sie kann sehr klein sein. Aufgrund des geringen Materialbedarfs für die Elektrode 27 können auch sehr hochwertige Materialien, wie z.B. Platin, Tantal oder Hastelloy C, als Werkstoff für die Elektroden 27 eingesetzt werden, ohne dass die Materialkosten hierdurch erheblich steigen.

Eine weitere Reduktion der Materialkosten kann dadurch erzielt werden, dass lediglich ein mit dem Medium in Kontakt kommender Teil der Elektrode 27 aus dem hochwertigen Material hergestellt wird. Ein Bespiel hierzu ist in Fig. 3 dargestellt. Die dort dargestellte Elektrode 27 besteht aus zwei Teilen, nämlich einer Elektrodenspitze 27a, die in den Innenraum 31 des Prozessanschlusses 21 mündet, und einem Elektrodenkopf 27b, der aus dem Prozessanschluss 21 heraus ragt und der mit der Elektrodenspitze 27a verbunden ist. In dem Fall genügt es, wenn die Elektrodenspitze 27a aus einem anwendungs-spezifischen gegebenenfalls sehr hochwertigen Material besteht. Der Elektrodenkopf 27b kann aus einem kostengünstigen elektrische leitfähigen Material, z.B. einem einfachen Stahl oder Edelstahl, bestehen. Die Elektrodenspitze 27a ist in die Bohrung 33 flüssigkeitsdicht eingesetzt. Hierzu kann beispielsweise auf die Lehre der EP 0 892 252 A1 zurückgegriffen werden. Dort ist eine im Messaufnehmer anzuordnende Messelektrode beschrieben. Der flüssigkeitsdichte Einbau kann beispielsweise dadurch erzielt werden, dass die Elektrodenspitze 27a mit hintereinander liegenden kegelstumpf-förmigen Abschnitten versehen ist, in denen sich das Material, in dem die Bohrung 33 angebracht ist verkrallt.

Die Elektrodenspitze 27a ist beispielsweise über eine Schraubverbindung mit einem an den Elektrodenkopf 27 angeformten in die Bohrung 33 eingeführten Gewindestift verschraubt.

Um eine durch eine elektrochemische Wechselwirkung zwischen der Elektrode 27 und den Messelektroden der Messelektrodenanordnung 17 bedingte elektrochemische Korrosion der Elektroden zu vermeiden, bestehen die Elektroden 27 und die Messelektroden vorzugsweise aus dem gleichen Material, z.B. aus einem Edelstahl, aus Platin, Tantal oder aus Hastelloy C. Sofern dies nicht möglich ist, sollten die Messelektroden aus einem edleren Material bestehen, als die Elektroden 27, die zur Erdung des Mediums eingesetzt werden. Hierdurch wird erreicht, dass durch elektrochemische Korrosion zunächst die Elektroden 27 und nicht die Messelektroden schaden nehmen. Der Grund hierfür besteht darin, dass die Elektroden 27 viele leichter gewartet und gegebenenfalls ersetzt werden können, als die Messelektroden.

Außerdem muss natürlich ein Material gewählt werden, dass eine ausreichende chemische und/oder mechanische Beständigkeit der Elektroden 27 im Hinblick auf das Medium gewährleistet. Je nach Anwendung kann es erforderlich sein relativ teure Spezialwerkstoffe einzusetzen.

Die Elektrode 27 ist in dem dargestellten Ausführungsbeispiel eine Stiftelektrode, die durch eine Außenwand 29 eines im Betrieb vom Medium durchströmten rohrförmigen Abschnitts des Prozessanschlusses hindurch in dessen Innenraum 31 führt. Sie ist in einer durchgehenden durch die Außenwand 29 hindurch führenden Bohrung 33 des Prozessanschlusses 21 angeordnet ist.

Die Elektrode 27 ist über eine elektrisch leitende Verbindung mit dem Messaufnehmer 11, insb. dessen Messaufnehmergehäuse 19 verbunden. Hierdurch wird der gewünschte Potentialausgleich bewirkt. Das Medium ist dadurch über die Erdung des Messaufnehmergehäuses 19 geerdet. Die hier nur schematisch dargestellte Erdung des Messaufnehmergehäuses 19 ist in der Regel gesetzlich vorgeschrieben und erfolgt typischer Weise über den hier nicht dargestellten elektrischen Anschluss des Messaufnehmers 11.

Die elektrisch leitende Verbindung kann auf vielfältige Weise erfolgen. Vorzugsweise wird hierzu die ohnehin erforderliche mechanische Verbindung zwischen dem Prozessanschluss 21 und dem Messaufnehmer 11 genutzt.

Jeder mindestens eine Elektrode 27 enthaltenden Prozessanschluss 21 weist endseitig, den oben genannten Flansch 25 auf, der dazu dient, den Prozessanschluss 21 an dem die Mündung des Messrohrs 13 umgebenden Gegenflansch 23 des Messaufnehmers zu montieren. Vorzugsweise ist der Gegenflansch 23 elektrisch leitfähig und Teil des Messaufnehmergehäuses 19 oder elektrisch leitend mit diesem verbunden. In der Regel besteht der Gegenflansch 25 ohnehin aus einem Metall, z.B. aus Stahl oder Edelstahl, und ist damit ohnehin elektrisch leitfähig.

Der Flansch 25 ist mittels elektrisch leitfähiger mechanischer Verbindungsmittel auf dem Gegenflansch montierbar 25. In dem dargestellten Ausführungsbeispiel weist der Flansch 25 durchgehende Bohrungen 35 auf, durch die hindurch in den Figuren nicht dargestellte metallische Bolzenschrauben in entsprechende Sacklochgewindebohrungen 37 im Gegenflansch 23 eingeschraubt werden.

Zusätzlich umfasst die elektrisch leitende Verbindung zwischen der Elektrode 27 und dem Messaufnehmer 11 ein Verbindungsstück 39 auf, über das die Elektrode 27 elektrisch leitend mit den mechanischen Verbindungsmitteln, hier den Bolzenschrauben, verbunden ist, wenn der Flansch 25 auf dem Gegenflansch 23 montiert ist.

In dem dargestellten Ausführungsbeispiel ist das Verbindungsstück 39 ein metallisches Formteil, z.B. ein Edelstahlblech, das einen ersten Abschnitt 39a aufweist, der außen auf einem Bereich des Prozessanschlusses 21 aufliegt, in den die Elektrode 27 eingesetzt ist, und das einen zweiten Abschnitt 39b aufweist, der auf einer vom Messaufnehmer 11 abgewandten Oberfläche des Flansches 25 aufliegt. Die Elektrode 27 führt durch den ersten Abschnitt 39a hindurch und weist einen aus dem Prozessanschluss 21 heraus führenden Kopf 27b auf, der das Verbindungsstück 39 berührt. Die elektrisch leitfähigen mechanischen Verbindungsmittel sind durch den zweiten Abschnitt 39b hindurch geführt und berühren diesen.

**Tabelle 1**

| | |
|---|---|
| 1 | Prozessanschluss |
| 3 | Messaufnehmer |
| 5 | Erdungsring |
| 7 | Dichtung |
| 9 | Dichtung |
| 11 | Messaufnehmer |
| 13 | Messrohr |
| 15 | Magnetfeldsystem |
| 17 | Messelektrodenanordnung |
| 19 | Messaufnehmergehäuse |
| 21 | Prozessanschluss |
| 23 | Gegenflansch |
| 25 | Flansch |
| 27 | Elektrode |
| 27a | Elektrodenspitze |
| 27b | Elektrodenkopf |
| 29 | Außenwand |
| 31 | Innenraum |
| 33 | Bohrung |
| 35 | Bohrungen |
| 37 | Sacklochgewindebohrungen |
| 39 | Verbindungsstück |
| 39a | Abschnitt |
| 39b | Abschnitt |

## Patentansprüche

1. Messaufnehmer (11) eines Durchflussmessgeräts zum Messen eines Durchflusses eines Mediums durch ein bestehendes Rohrleitungssystem, mit
- einem Messaufnehmergehäuse (19),
- einem in dem Messaufnehmer integrierten Messrohr (13),
- zwei Prozessanschlüssen (21) aus einem Isolator, über die das Messrohr (13) an das Rohrleitungssystem anschließbar ist, und
- mindestens einer in einen der Prozessanschlüsse (21) eingesetzten Elektrode (27),
-- die in einem im Betrieb vom Medium durchströmten Innenraum (31) des Prozessanschlusses (21) mündet und über eine elektrisch leitende Verbindung mit dem Messaufnehmergehäuse (19) verbunden ist, und wobei die Elektrode (27) eine Stiftelektrode ist, die durch eine Außenwand (29) eines im Betrieb vom Medium durchströmten rohrförmigen Abschnitts des Prozessanschlusses (21) hindurch in dessen Innenraum (31) führt.

2. Messaufnehmer nach Anspruch 1, bei dem die Elektrode (27) in einer durchgehenden Bohrung (33) in einer Außenwand (29) des Prozessanschlusses (21) angeordnet ist.

3. Messaufnehmer nach Anspruch 1, bei dem jeder mindestens eine Elektrode (27) enthaltenden Prozessanschluss (21) endseitig einen Flansch (25) aufweist, der dazu dient, den Prozessanschluss (21) an einem eine Mündung des Messrohrs (13) umgebenden Gegenflansch (23) des Messaufnehmers (11) zu montieren.

4. Messaufnehmer nach Anspruch 3, bei dem
- der Gegenflansch (23) elektrisch leitfähig ist und Teil des Messaufnehmergehäuses (19) ist oder elektrisch leitend mit diesem verbunden ist,
- der Flansch (25) mittels elektrisch leitfähiger mechanischer Verbindungsmittel auf dem Gegenflansch (23) montierbar ist, und
- die elektrisch leitende Verbindung zwischen der Elektrode (27) und dem Messaufnehmergehäuse (19) ein Verbindungsstück (39) aufweist, über das die Elektrode (27) elektrisch leitend mit den mechanischen Verbindungsmitteln verbunden ist, wenn der Flansch (25) auf dem Gegenflansch (23) montiert ist.

5. Messaufnehmer nach Anspruch 4, bei dem
- das Verbindungsstück (39) ein metallisches Formteil ist,
-- das einen ersten Abschnitt (39a) aufweist, der außen auf einem Bereich des Prozessanschlusses (21) aufliegt, in den die Elektrode (27) eingesetzt ist,
-- das einen zweiten Abschnitt (39b) aufweist, der auf einer vom Messaufnehmer (11) abgewandten Oberfläche des Flansches (25) aufliegt,
- die Elektrode (27) durch den ersten Abschnitt (39a) hindurch geführt ist und einen aus dem Prozessanschluss (21) heraus führenden Kopf (27a) aufweist, der das Verbindungsstück (39) berührt, und
- die elektrisch leitfähigen mechanischen Verbindungsmittel durch den zweiten Abschnitt (39b) hindurch geführt sind und diesen berühren.

6. Messaufnehmer nach Anspruch 1, bei dem
die Elektrode (27)
- eine Elektrodenspitze (27a) aufweist,
-- die in den Innenraum (31) des Prozessanschlusses (21) mündet, und
- einen Elektrodenkopf (27b) aufweist,
-- der aus dem Prozessanschluss (21) heraus ragt und
-- der mit der Elektrodenspitze (27a) verbunden ist.

7. Prozessanschluss (21) aus einem Isolator für einen Messaufnehmer eines Durchflussmessgeräts zum Messen eines Durchflusses eines Mediums durch
ein bestehendes Rohrleitungssystem, mit einem Messaufnehmergehäuse (19) und einem in dem Messaufnehmer (11) integrierten Messrohr (13),
- der dazu dient, das Messrohr (13) an das Rohrteitungssystem anzuschließen,
- in den mindestens eine Elektrode (27) eingesetzt ist,
-- die in einem im Betrieb vom Medium durchströmten Innenraum (31) des Prozessanschlusses (21) mündet und über eine elektrisch leitende Verbindung mit dem Messaufnehmergehäuse (19) verbindbar ist und wobei die Elektrode (27) eine
Stiftelektrode ist, die durch eine Außenwand (29) des im Betrieb vom Medium durchströmten rohrförmigen Abschnitts des Prozessanschlusses (21) hindurch in dessen Innenraum (31) führt.

## Claims

1. Sensor (11) of a flowmeter designed for measuring a flow of a medium through an existing pipe system with
- a sensor housing (19),
- a measuring tube (13) integrated into the sensor,
- two process connections (21) made from an insulator, via which the measuring tube (13) can be connected to the pipe system, and
- at least one electrode (27) inserted into one of the process connections (21),
-- said electrode ending in an interior chamber (31) of the process connection (21), through said chamber medium flows during operation, and being connected to the sensor housing (19) via an electrically conductive connection, and wherein the electrode (27) is a pin electrode which leads through an outer wall (29) of a tubular section of the process connection (21) and into the interior chamber (31) of the process connection, wherein medium flows through said tubular section of the process connection during operation.

2. Sensor as claimed in Claim 1, wherein the electrode (27) is arranged in a continuous bore (33) in an outer wall (29) of the process connection (21).

3. Sensor as claimed in Claim 1, wherein each process connection (21) containing at least one electrode (27) has a flange (25) at the end which is used to mount the process connection (21) on a counter flange (23) of the sensor (11) surrounding an outlet of the measuring tube (13).

4. Sensor as claimed in Claim 3, wherein
- the counter flange (23) is electrically conductive and part of the sensor housing (19), or is connected in an electrically conductive manner to said sensor housing,
- the flange (25) can be mounted on the counter flange (23) by means of electrically conductive mechanical connection elements, and
- the electrically conductive connection between the electrode (27) and the sensor housing (19) features a connection piece (39), via which the electrode (27) is connected to the mechanical connection elements in an electrically conductive manner when the flange (25) is mounted on the counter flange (23).

5. Sensor as claimed in Claim 4, wherein
- the connection piece (39) is a metal molded piece,
-- which has a first section (39a) which rests on the outside on an area of the process connection (21) into which the electrode (27) is inserted,
-- which has a second section (39b) which rests on a surface of the flange (25) facing away from the sensor (11),
- the electrode (27) is guided through the first section (39a) and has a head (27a) that leads out of the process connection (21) and is in contact with the connection piece (39), and
- the electrically conductive mechanical connection elements are guided through the second section (39b) and are in contact with said section.

6. Sensor as claimed in Claim 1, wherein
the electrode (27)
- has an electrode tip (27a),
-- which ends in the interior chamber (31) of the process connection (21), and
- has an electrode head (27b),
-- which projects out of the process connection (21) and
-- which is connected to the electrode tip (27a).

7. Process connection (21) made from an isolator, designed for a sensor of a flowmeter for measuring the flow of a medium through an existing pipe system, with a sensor housing (19) and a measuring tube (13) integrated in the sensor (11),
- that serves to connect the measuring tube (13) to the pipe system,
- in which at least one electrode (27) is inserted,
-- which ends in an interior chamber (31) of the process connection (21), through said chamber medium flows during operation, and can be connected to the sensor housing (19) via an electrically conductive connection, and wherein the electrode (27) is a pin electrode which leads through an outer wall (29) of the tubular section of the process connection (21) and into the interior chamber (31) of the process connection, wherein medium flows through said tubular section of the process connection during operation.

## Revendications

1. Capteur (11) d'un débitmètre destiné à la mesure d'un débit d'un produit circulant à travers un système de conduites existant, avec
- un boîtier de capteur (19),
- un tube de mesure (13) intégré dans le capteur,
- deux raccords process (21) constitués d'un isolant, par l'intermédiaire desquels le tube de mesure (13) peut être raccordé au système de conduites, et
- au moins une électrode (27) insérée dans l'un des raccords process (21),
-- électrode qui débouche dans un espace intérieur (31) du raccord process (21), lequel espace est parcouru en fonctionnement par le produit, et qui est reliée avec le boîtier de capteur (19) par l'intermédiaire d'une liaison conductrice, et l'électrode (27) étant une électrode à pointe, qui conduit à travers une paroi extérieure (29) d'une partie tubulaire du raccord process (21), laquelle est parcourue en fonctionnement par le produit, jusque dans l'espace intérieur (31).

2. Capteur selon la revendication 1, pour lequel l'électrode (27) est disposée dans un alésage traversant (33), dans une paroi extérieure (29) du raccord process (21).

3. Capteur selon la revendication 1, pour lequel chacun des raccords process (21) contenant au moins une électrode (27) comporte en son extrémité une bride (25), qui sert à monter le raccord process (21) sur une contre-bride (23) du capteur (11) entourant une embouchure du tube de mesure (13).

4. Capteur selon la revendication 3, pour lequel
- la contre-bride (23) est électroconductrice et fait partie intégrante du boîtier de capteur (19), ou est reliée avec celui-ci au moyen d'une liaison électroconductrice,
- la bride (25) peut être montée au moyen d'éléments de liaison mécaniques conducteurs sur la contre-bride (23), et
- la liaison électroconductrice entre l'électrode (27) et le boîtier de capteur (19) présente un pièce de liaison (39), par l'intermédiaire de laquelle l'électrode (27) est reliée par une liaison électroconductrice avec les éléments de liaison mécaniques lorsque la bride (25) est montée sur la contre-bride (23).

5. Capteur selon la revendication 4, pour lequel
- la pièce de liaison (39) est une pièce métallique moulée,
-- qui présente une première partie (39a) reposant à l'extérieur sur une zone du raccord process (21), dans laquelle est insérée l'électrode (27),
-- qui présente une deuxième partie (39b) reposant sur une surface de la bride (25) se trouvant à l'opposé du capteur (11),
- l'électrode (27) est guidée à travers la première partie (39a) et présente une tête de guidage (27a) sortant du raccord process (21), tête qui est en contact avec la pièce de liaison (39), et
- les éléments de liaison mécaniques électroconducteurs sont guidés à travers la deuxième partie (39b) et sont en contact avec cette dernière.

6. Capteur selon la revendication 1, pour lequel
l'électrode (27)
- présente une pointe d'électrode (27a),
-- qui débouche dans l'espace intérieur (31) du raccord process (21), et
- une tête d'électrode (27b),
-- qui sort du raccord process (21) et
-- qui est reliée avec la pointe d'électrode (27a).

7. Raccord process (21) constitué d'un isolant, destiné à un capteur d'un débitmètre dédié à la mesure d'un produit à travers un système de conduites existant, avec un boîtier de capteur (19) et un tube de mesure (13) intégré dans le capteur (11),
- qui sert à raccorder le tube de mesure (13) au système de conduites,
- dans lequel est insérée au moins une électrode (27),
-- qui débouche dans un espace intérieur (31) du raccord process (21), lequel espace est parcouru en fonctionnement par le produit, et qui peut être reliée avec le boîtier de capteur (19) par l'intermédiaire d'une liaison conductrice, et l'électrode (27) étant une électrode à pointe, qui conduit à travers une paroi extérieure (29) d'une partie tubulaire du raccord process (21), laquelle est parcourue en fonctionnement par le produit, jusque dans l'espace intérieur (31).
